# EUROPÄISCHE PATENTSCHRIFT

(11) **EP 3 478 984 B1**
(45) Veröffentlichungstag und Bekanntmachung des Hinweises auf die Patenterteilung: **23.08.2023**
(21) Anmeldenummer: 17730460.7
(22) Anmeldetag: 14.06.2017
(51) Int. Cl.: F16D 55/22, F16D 65/12, B60B 27/00, B60B 27/06, F16D 65/02

(54) **ACHSENEND-BAUGRUPPE MIT EINER RADNABENEINHEIT UND EINER RADBREMSE**
AXLE END SUBASSEMBLY COMPRISING A WHEEL HUB UNIT AND A WHEEL BRAKE
ENSEMBLE D'EXTRÉMITÉ D'AXE COMPRENANT UNE UNITÉ MOYEU DE ROUE ET UN FREIN DE ROUE

(30) Priorität: 30.06.2016 DE 102016111942
(43) Veröffentlichungstag der Anmeldung: 08.05.2019
(73) Patentinhaber: KNORR-BREMSE Systeme für Nutzfahrzeuge GmbH, 80809 München (DE)
(72) Erfinder: GRUBER, Markus, 85560 Ebersberg (DE); TRIMPE, Robert, 82234 Weßling (DE); RUHL, Edgar, 85051 Ingolstadt (DE); KOLODZIEJCAK, Witold, 80933 München (DE)
(86) Internationale Anmeldenummer: PCT/EP2017/064476
(87) Internationale Veröffentlichungsnummer: WO 2018/001726

(56) Entgegenhaltungen:
- EP-B1- 1 448 399
- WO-A1-2015/052553
- WO-A1-2015/082428
- DE-A1- 10 121 862
- DE-A1- 10 340 471
- DE-A1-102012 208 920
- US-A1- 2012 247 881
- US-B1- 10 308 070

## Beschreibung

Die Erfindung betrifft eine Achsenend-Baugruppe für ein Fahrzeug bzw. für eine Fahrzeug-Radachse, mit einer Radbremsenanordnung und einer Radnabenanordnung nach dem Oberbegriff des Anspruchs 1, eine Radachseneinheit und ein Verfahren zur Montage der Radachseneinheit.

Radbremsen von Nutzfahrzeugen werden zusammen mit anderen Komponenten an einem Achsschenkel (Vorderachse, kurz "VA") bzw. an einer Achse (Hinterachse, kurz "HA") zu einem sogenannten "Wheelend" zusammengefügt. Hierbei sind bei der Achs-Fahrzeugmontage verschiedene Einzelschritte notwendig.

Ein bekanntes Verfahren zur Montage von Achsen an Nutzfahrzeugen weist beispielsweise folgende Schritte auf:
- Verbinden eines Achsstummels mit einem Achskörper eines Fahrzeugs, meist durch Reibschweißen;
- Anbringen eines Bremsenadapters bzw. in der Regel eines Bremsträgerflansches (durch Schweißen oder Schrauben) an den Achskörper;
- Einpressen von Radbolzen in eine Radnabe;
- Einpressen eines Radlagers in die Radnabe;
- Anflanschen einer Bremsscheibe an die Radnabe:
- Aufstecken einer Nabenanordnung auf den Achsschenkel und Anziehen mit einer Zentralmutter;
- Durchstecken einer Antriebswelle und Anflanschen an der Nabe; und
- Anschrauben einer Scheibenbremse an den Bremsträgerflansch.

Diese Montage der Komponenten an den Achskörper bringt dabei die Problematik mit sich, dass einzelne schwere Bauteile relativ genau zueinander positioniert und teilweise miteinander durch Schraubverbindungen verbunden werden müssen. Die Zugänglichkeit zur Schraubverbindung mittels Serienanzugswerkzeugen ist teilweise eingeschränkt und kann deshalb in der Regel nur mit Sonderwerkzeugen erfolgen.

Der Achskörper ist das größte und schwerste Teil der Achse. Er ist am Umfang zumeist quadratisch oder rechteckig und kann deshalb auf den massiven Montageböcken nur in vier Positionen gelagert werden. Im Wesentlichen ist dieser nur um die Längsachse drehbar. Die Einbaulage der Scheibenbremse ist aber vom Gesamtfahrzeug abhängig und richtet sich nicht nach dem quadratischen Querschnitt. Deshalb sind aufwändige Montagevorrichtungen beim Fügen der Bremse notwendig.

Die Radbremse - insbesondere in einer Ausgestaltung als Scheibenbremse - kann zum Abschluss der Montage ausschließlich radial aufgesteckt werden. Dies birgt das Risiko, dass die Beläge bei der Montage an den Kanten beschädigt werden. Auch ist der Einsatz von Formschlusselementen im Schnittstellenbereich nicht möglich, da sonst im Reparaturfall die Bremse nicht mehr demontiert werden könnte.

Der notwendigen Montagereihenfolge geschuldet ist die Tatsache, dass formschlüssige Lösungen bei der Gestaltung der Schnittstellen nicht oder nur teilweise realisierbar sind. Aus der DE 103 40 471 A1 ist eine Scheibenbremse für ein Kraftfahrzeug bekannt, bei der auf einem an einer Schwinge befestigten Achskörper ein eine Bremsscheibennabe tragendes Lager sitzt.

Aus der DE 10 2012 208 920 A1 ist ein als vormontierte Baugruppe ausgeführter Radkopf für eine Achse eines Arbeitsfahrzeugs bekannt, die sich aus einem Nabenträger mit einer an diesem über Radlager gelagerten Radnabe und einem eine Lamellenbremse aufnehmenden Bremsgehäuse zusammensetzt. Der Nabenträger weist einen Flanschbereich auf, über den er gemeinsam mit dem zwischenliegenden Bremsgehäuse an einer Achsbrücke befestigt ist.

Aus der US2012/247881 A1 ist eine Scheibenbremsnabenbaugruppe bekannt, bei der eine Bremsscheibennabe direkt an einem sich in die Bremsscheibennabe erstreckenden Achserohr drehbar gelagert ist.

Aus der DE 101 21 862 A1 ist eine Radlageranordnung bekannt, bei der eine als Achsnabe ausgebildete Einheit mit einer Radbremsenanordnung und einer Radnabenanordnung auf ein Ende eines Achskörpers der Fahrzeugachse aufgeschraubt wird. Die Verschraubung sichert die Achsnabe in axialer Richtung an dem Achskörper. Ein Befestigungskranz mit flanschartigen Bremsenträgern ist dabei auf ein Außengewinde der Achsnabe aufgeschraubt.

Die Erfindung hat vor diesem Hintergrund die Aufgabe, eine leichter montierbare Achsenend-Baugruppe mit einer Radbremsenanordnung und einer Radnabenanordnung, eine entsprechend verbesserte Radachseneinheit und ein verbessertes Verfahren zur Montage der Radachseneinheit zu schaffen.

Die Erfindung löst diese Aufgabe durch die Gegenstände der Ansprüche 1, 16 und 17.

Nach Anspruch 1 wird eine Achsenend-Baugruppe mit einer Radbremsenanordnung und einer Radnabenanordnung geschaffen, die sich dadurch auszeichnet, dass die Achsenend-Baugruppe als eine vormontierte Einheit ausgebildet ist, die ein Hohlwellenelement aufweist, auf dem die Radbremsenanordnung und die Radnabenanordnung angeordnet sind. Das Hohlwellenelement durchsetzt dann vorzugsweise die Radbremsenanordnung und die Radnabenanordnung, insbesondere vollständig in axialer Richtung. Die Achsenend-Baugruppe bildet derart ein komplett vormontiertes "Wheelend", dessen Einzelkomponenten zunächst zur vormontierten Einheit zusammengestellt werden. Diese vormontierte Einheit kann dann einfach und sicher an einem Ende des Achskörpers der Fahrzeugachse des Fahrzeugs montiert werden. Besonders vorteilhaft ist, dass auch die Radbremsanordnung zur vormontierten Einheit gehört. Insbesondere dann, wenn die Radbremse eine Scheibenbremse ist, wird derart die Montage dieser relativ großen Baueinheit deutlich vereinfacht. Das Hohlwellenelement ist dazu ausgelegt, mit einem ersten Ende eines Achskörpers einer Fahrzeugachse verbunden zu werden. Denn derart wird die Montage der vormontierten Einheit an dem Achskörper besonders einfach. Dies gilt insbesondere für die erfindungsgemäße Achsenend-Baugruppe, bei der das Hohlwellenelement an seinem einen axialen Ende einen Gewindeabschnitt aufweist, der dazu ausgelegt ist, mit einem korrespondierenden Gewindeabschnitt des Achskörpers verschraubt zu werden.

Die Radbremsanordnung der vormontierten Einheit weist zumindest einen Bremsenadapter zur Montage einer Radbremse, insbesondere einer Scheibenbremse, auf. Dieser Bremsenadapter kann zur Montage eines Bremsträgers ausgelegt sein oder direkt zur Montage eines Bremssattels, so dass er selbst die Bremsträgerfunktion übernimmt. Der Bremsenadapter ist nach Art einer Montageplatte ausgebildet, die von dem Hohlwellenelement durchsetzt ist und die sich im Wesentlichen senkrecht zu dem Hohlwellenelement bzw. zu dessen Achsrichtung Y erstreckt. Zwischen dem Bremsenadapter und dem Achskörper ist eine direkte Drehmomentübertragungsschnittstelle vorgesehen, um die Krafteinleitung direkt von der Radbremse in den Achskörper zu realisieren.

Es ist weiter vorteilhaft, wenn die Radnabenanordnung zumindest eine Radnabe und eines oder mehrere Radlager aufweist. Noch vorteilhafter ist es, wenn die Radnabenanordnung ferner auch mehrere Radbolzen und/oder eine Bremsscheibe aufweist.

Nach einer weiteren Variante ist vorgesehen, dass die vormontierte Einheit ferner eine Distanzhülse aufweist, welche auf das Hohlwellenelement an die Radnabe angesetzt ist.

Die Radbremsanordnung umfasst vorzugsweise auch die Radbremse, d.h. vorzugsweise die Scheibenbremse mit dem Bremssattel und vorzugsweise einem Bremszylinder und ggf. einem Bremsträger. Auch ein ABS-Sensor und ein Polrad können hier ergänzt werden bzw. vorgesehen sein. Vorzugsweise ist eine Sicherung gegen axiales Verrutschen von einem oder mehreren dieser Teile vorgesehen.

Anspruch 16 schafft eine Radachseneinheit mit einem Achskörper, an dem wenigstens eine Achsenend-Baugruppe nach einem der vorstehenden Ansprüche angebracht ist und Anspruch 17 schafft ein Verfahren zur Montage einer Radachseneinheit nach Anspruch 16, bei welchem zunächst eine Achsenend-Baugruppe als vormontierte Einheit nach einem der Ansprüche 1 bis 15 gebildet wird und bei dem diese vormontierte Einheit dann als Ganzes an dem Achskörper montiert wird. Dieses Verfahren erlaubt ein besonders einfaches und sicheres Ausbilden der Fahrzeugachse. Vorteilhafte Ausgestaltungen der Erfindung sind den Unteransprüchen zu entnehmen. Nachfolgend wird die Erfindung anhand von Ausführungsbeispielen unter Bezug auf die Zeichnung näher beschrieben, wobei auch weitere Vorteile und Optionen sowie vorteilhafte Varianten der Erfindung erörtert werden. Es zeigt:
- Fig. 1: eine Schnittansicht durch eine erste Anordnung mit einer erfindungsgemäßen Achsenend-Baugruppe, montiert an einem Achskörper;
- Fig. 2: in a) eine Schnittansicht durch eine zweite Anordnung mit einer zweiten erfindungsgemäßen Achsenend-Baugruppe, montiert an einem Achskörper, und in b) eine Ausschnittsvergrößerung aus a);
- Fig. 3: eine perspektivische Ansicht eines Abschnitts einer Anordnung nach Art der Fig. 1;
- Fig. 4: eine perspektivische Ansicht eines Abschnitts einer Anordnung nach Art der Fig. 2; und
- Fig. 5: in a) bis e) eine Montage einer Achsenend-Baugruppe zu einer vormontierten Einheit in hier fünf Schritten und in f) die an einem Achskörper montierte Achsenend-Baugruppe;
- Fig. 6: in a) eine Schnittansicht durch eine weitere Anordnung mit einer weiteren erfindungsgemäßen Achsenend-Baugruppe, montiert an einem Achskörper und in b) eine Ausschnittsvergrößerung aus a);
- Fig. 7: in a) eine teilgeschnittene perspektivische Ansicht eines Teils einer Anordnung nach Art der Fig. 6, in b) eine weitere perspektivische Ansicht eines Teils einer Anordnung nach Art der Fig. 6 und in c) und d) perspektivische Ansichten von zwei einzelnen Bauteilen der Anordnung aus a).

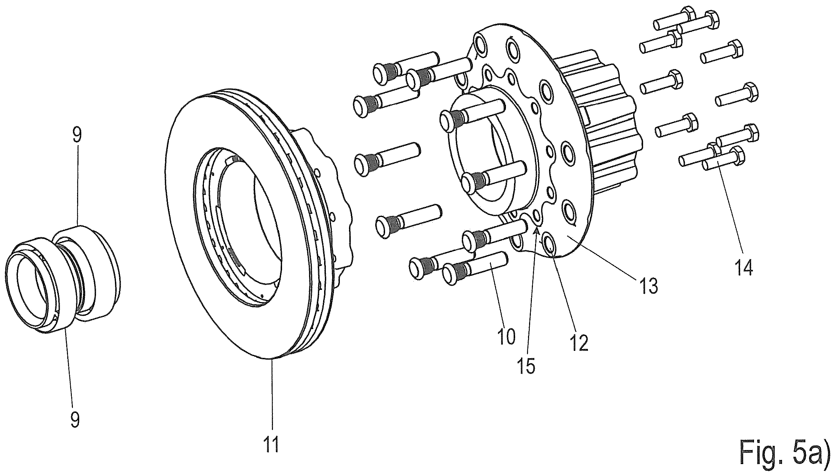

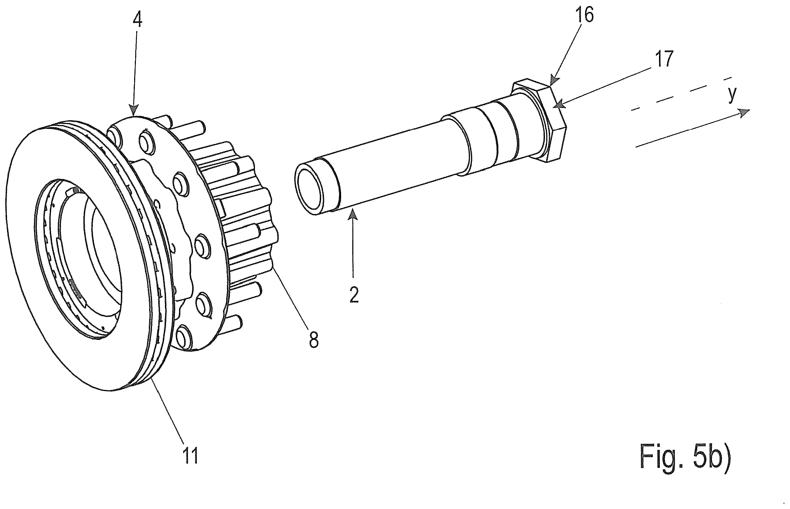

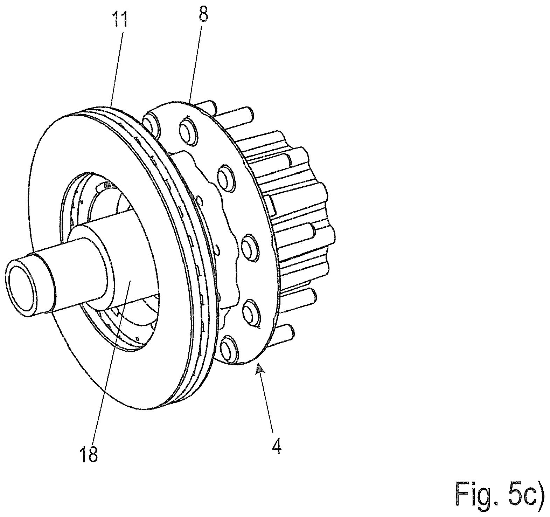

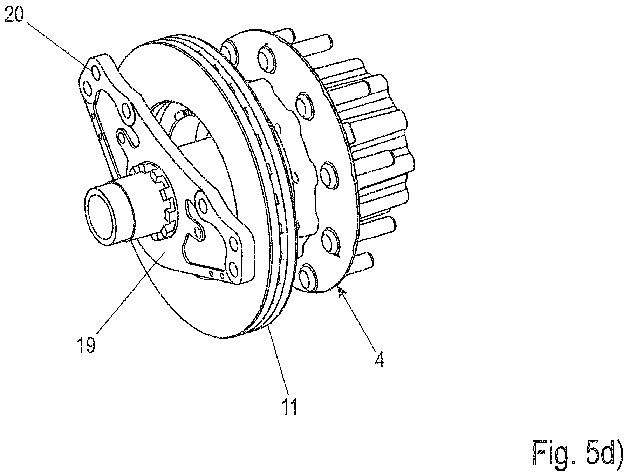

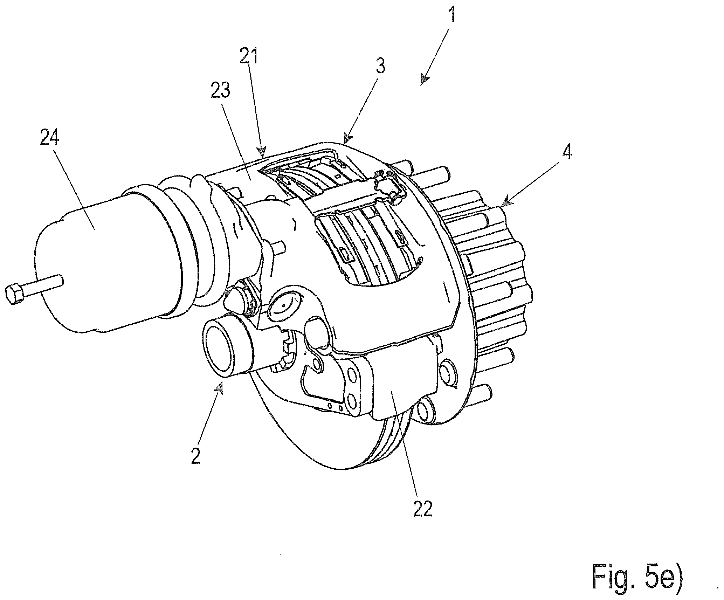

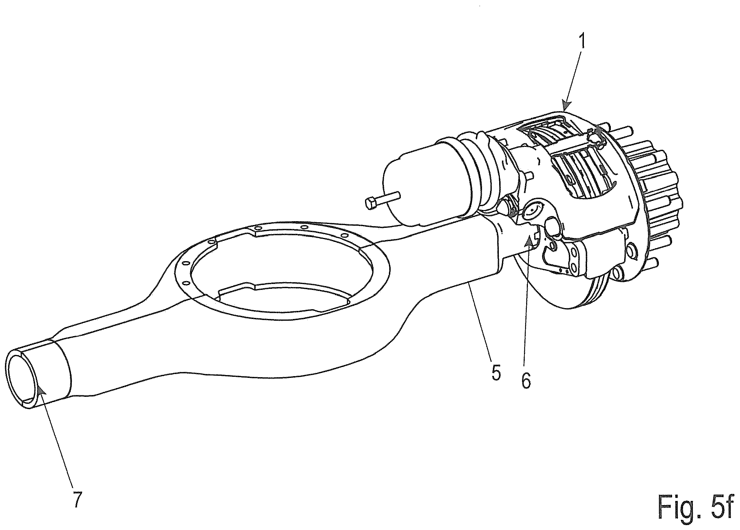

**Fig. 5 e)** zeigt eine Achsenend-Baugruppe 1 (auch "Wheelend" genannt), die als eine vormontierte Einheit ausgebildet ist, die einen Hohlwellenelement 2 aufweist, auf dem eine Radbremsenanordnung 3 und eine Radnabenanordnung 4 angeordnet sind.

Das Hohlwellenelement 2 ist wiederum dazu ausgelegt, mit einem ersten Ende 6 eines nicht in der Fahrt sich drehenden Achskörpers 5 einer Fahrzeugachse verbunden zu werden, wie dies in **Fig. 5f** erkennbar ist. Das zweite gegenüberliegende Ende 7 des Achskörpers 6 kann mit einer weiteren Achsenend-Baugruppe nach Art der Baugruppe 1 verbunden werden.

Besonders vorteilhaft ist, dass die Achsenend-Baugruppe mit den beiden Haupt-Unterbaugruppen "Radbremse" und "Radnabe" eine vormontierte Einheit bildet, die in einfacher Weise vormontierbar ist, wobei von allen Seiten eine sehr gute Zugänglichkeit zu den Komponenten der Achsenend-Baugruppe 1 gewährleistet ist, und dass diese vormontierte Baueinheit dann wiederum einfach und schnell an dem Achskörper 5 montierbar ist.

Nachfolgend sei zunächst anhand der Figuren **5a bis 5e** erläutert, wie beispielhaft aus Einzelkomponenten die Achsenend-Baugruppe 1 zusammengebaut bzw. montiert werden kann.

Dabei ist die Montage hier in fünf Haupt-Montageschritte A) bis E) aufgeteilt. Diese können jeweils wieder Untermontageschritte aufweisen. Die gewählte Reihenfolge der fünf Schritte A) bis E) ist vorteilhaft und einfach. Sie ist aber nicht zwingend, sondern kann im Rahmen der Erfindung variiert werden.

Der erste Montageschritt A - siehe **Fig. 5a** - beinhaltet eine Vormontage der Radnabenanordnung 4.

Die Radnabenanordnung 4 weist hier zumindest folgendes auf: eine Radnabe 8, eines oder mehrere Radlager (Wälzlager) 9, mehrere Radbolzen 10 und eine Bremsscheibe 11. Dabei werden die Radlager 9 am Innenumfang der Radnabe 8 angeordnet. Die Radbolzen 10 werden umfangsverteilt in Löcher 12 eines Rad-Montageflansches 13 der Radnabe 8 eingesteckt. Zudem wird die Bremsscheibe 11, die hier als eine Topfbremsscheibe ausgebildet ist, an der Radnabe 8 festgelegt (hier mit Schrauben 14 an Löchern 15), so dass sie mit der Radnabe 8 drehbar ist. Die Radnabenanordnung 4 weist nach ihrer Vormontage eine zentrale mittige Durchgangsöffnung auf, die im montierten Zustand mit der Achsrichtung Y der Achse fluchtet, die der Drehachse entspricht.

Der zweite Montageschritt B - siehe **Fig. 5b** - ist ein Auffädeln/Aufsetzen der Radnabenanordnung 4 aus Schritt A) auf einen Hohlwellenelement 2, der dann die mittige Öffnung der Radnabenanordnung 4 durchsetzt.

Das Hohlwellenelement 2 kann Bereiche verschiedenen Durchmessers aufweisen, so dass sich Ringabsätze auf dem Hohlwellenelement 2 ausbilden. Hier ist an einem Ende des Hohlwellenelements 2 außen ein Ringbund 16 als axialer Anschlag ausgebildet. An seinem Außenumfang ist dieser Ringbund 16 zudem nach Art einer Drehmomentübertragungskontur 17 - beispielsweise nach Art eines Außenmehrkants - ausgebildet.

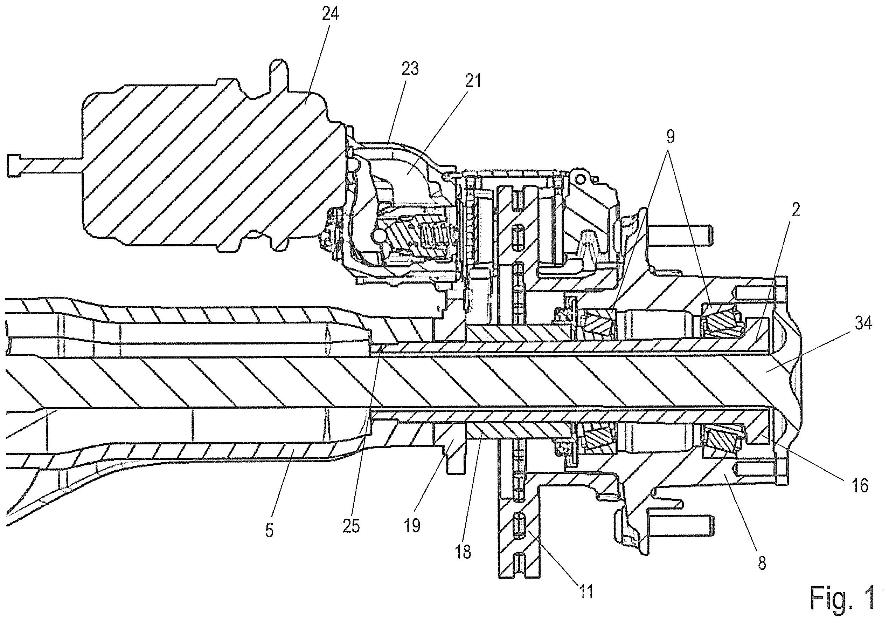

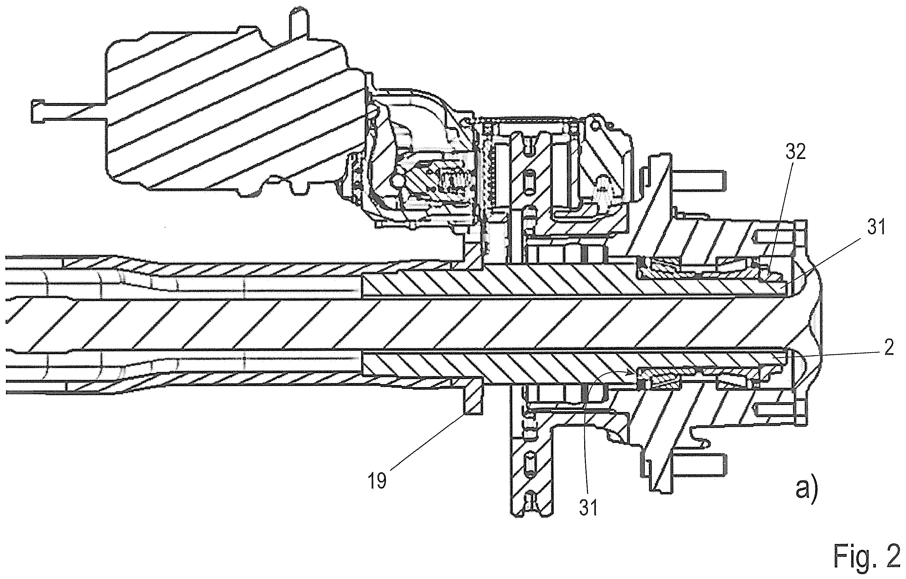

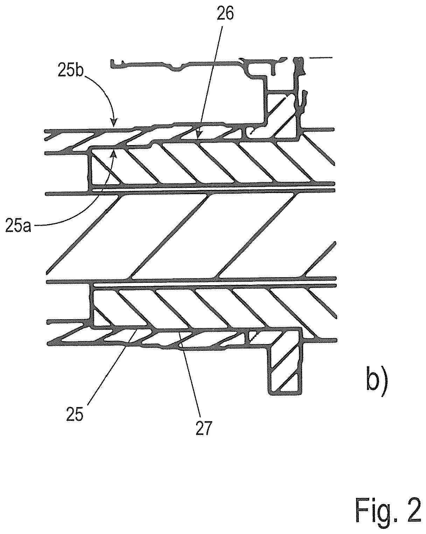

Der dritte Montageschritt C - siehe **Fig. 5c** - ist ein Auffädeln einer Distanzhülse 18 auf das Hohlwellenelement 2. Diese Distanzhülse 18 durchsetzt vorzugsweise axial die gesamte Bremsscheibe 11. Dieser Montageschritt ist optional notwendig, wenn eine Distanzhülse 18 vorgesehen ist, was bei dem Ausführungsbeispiel der **Fig. 1** vorgesehen ist, bei dem der **Fig. 2** aber beispielsweise nicht der Fall ist. Dies wird weiter unten noch näher erläutert.

Der vierte Montageschritt D - siehe **Fig. 5d** - ist ein Auffädeln eines zur Radbremsanordnung gehörigen Bremsenadapters 19 zur Montage einer Radbremse, insbesondere einer Scheibenbremse.

Dieser Bremsenadapter 19 kann nach Art einer Platte ausgebildet sein, die sich im Wesentlichen senkrecht zur Achsrichtung Y erstreckt. Er kann dazu genutzt werden, um beispielsweise an Montageöffnungen 20 einen Bremsträger an ihm anzubringen, an dem dann ein Bremssattel, beispielsweise ein Schiebesattel, montiert wird. Er kann auch direkt zum Anbringen eines Bremssattels, beispielsweise einer Festsattelscheibenbremse oder eines Schiebesattels genutzt werden.

Der fünfte Montageschritt D - siehe **Fig. 5e** - beinhaltet die Montage einer Radbremse an dem Bremsenadapter 19. Die Radbremse ist hier eine zur Radbremsanordnung 3 gehörige Scheibenbremse 21. Hier weist die Scheibenbremse 21 einen Bremsträger 22, einen Bremssattel 23 und vorzugsweise einen Bremsaktuator, hier einen Bremszylinder 24, auf. Im Bremssattel 23 sind Bremsbeläge und eine Zuspanneinheit angeordnet (hier nicht zu erkennen). Vorgesehen sein können an dieser Scheibenbremse 21 auch ein ABS-Sensor und ein Polrad (radial oder axial ausgeführt, hier nicht zu erkennen) und ggf. weitere Bauelemente wie eine Elektronikeinheit.

Insgesamt ist derart in vier oder fünf Schritten A, B und D, E oder A bis E die Achsenend-Baugruppe 1 mit dem Hohlwellenelement 2, auf dem die Radbremsenanordnung 3 und die Radnabenanordnung 4 angeordnet sind, zur vormontierten Einheit vervollständigt, die dann als Ganzes an den Achskörper 5 ansetzbar ist.

Vorzugsweise ist eine Sicherung gegen axiales Verrutschen der Bauteile der vormontierten Einheit getroffen.

Nach der Vormontage wird während der Achsmontage die gesamte vormontierte Einheit mit dem Achskörper 5 verbunden. Dies kann beispielsweise durch Verschrauben an einem Gewinde 25 (**Fig. 1****,** **2a****,** **2b**) geschehen. Vorzugweise weist die Hohlwelle 2 hierzu einen Gewindeabschnitt 25a (hier ein Außengewinde) auf, der mit einem korrespondierenden Gewindeabschnitt 25b (hier ein Innengewinde) des Achskörpers 5 verschraubbar ist bzw. auch verschraubt wird.

Somit können die Bauteile der vormontierten Einheit vorab miteinander verbunden werden und als gemeinsame Einheit 1 am Achskörper 5 angebracht werden. Der Achskörper 5 liegt an der Fahrzeugachse weiter innen als die vormontierte Einheit, die quasi deren Rad- und Bremsenende (auch "Wheelend" genannt) bildet.

Die Schnittstelle der vormontierten Einheit 1 (Achsabschnitt mit Bremse, Bremsscheibe, Radlager) weist neben dem Gewindeabschnitt 25a an seinem einen freien Ende sich daran anschließend vorzugsweise mindestens einen gewindefreien Führungsabschnitt 26 auf. Dieser kann einen etwas größeren Durchmesser aufweisen als der Gewindeabschnitt 25a. Der Achskörper 5 ist dann dazu korrespondierend ausgebildet.

Bei der Montage kommt derart zuerst der Führungsabschnitt 26 des Hohlwellenelements 2 mit einem korrespondierenden Schnittstellenbereich 27 des Achskörpers 5 in Kontakt und es wird eine Führung gebildet, bevor die Gewindeabschnitte 25a, 25b dann in Kontakt gelangen und das Hohlwellenelement 2 der vormontierten Einheit mit dem Achskörper 5 sicher schraubend verbunden wird (siehe **Fig. 2b**). Derart ist die Montage besonders einfach und sicher.

Vorzugsweise ist auch eine direkte Drehmomentübertragungsschnittstelle zwischen dem Bremsenadapter und dem Achskörper 5 vorgesehen, gebildet durch entsprechend korrespondierende Formschlusselemente, die bei der Montage der vormontierten Einheit 1 an dem Achskörper miteinander in Eingriff gelangen.

Die Schnittstelle Bremsträger / Achse kann aber auch einstückig z.B. durch ergänzendes Schweißen bei der Montage der vormontierten Einheit am Achskörper 5 ausgeführt werden.

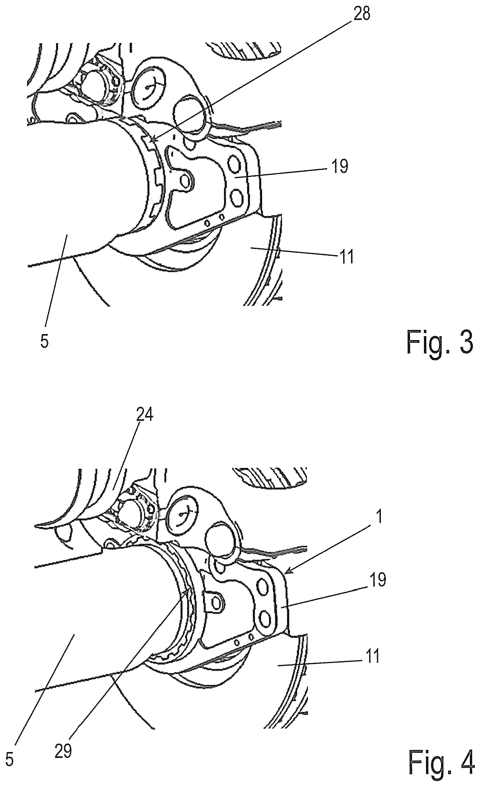

Die Verbindung zwischen dem Achskörper 5 und dem Bremsenadapter weist - um eine formschlüssige Verbindung als zusätzliche Verdrehsicherung zu realisieren - nach einer vorteilhaften Variante eine radial ausgeführte Verzahnung 28 (**Fig. 3**) oder nach einer anderen vorteilhaften Variante eine axial ausgeführte Verzahnung 29 (**Fig. 4**) jeweils zwischen Achskörper 5 und Bremsenadapter 19 auf. Diese Verzahnung 28, 29 ist jeweils derart ausgebildet, dass die bei einer Bremsung auftretenden Momente und Kräfte direkt von dem Bremsenadapter 19 auf den Achskörper 5 übertragen werden. Hierdurch wird auf einfache und sichere Weise ein Lösen der Verbindung zwischen dem Achskörper 5 und der vormontierten Einheit 1 verhindert und es wird eine sichere Drehmomentabstützung direkt am Achskörper 5 realisiert.

In einer Ausführungsvariante (**Fig. 2**) weist das Hohlwellenelement 2 an der der Schnittstelle zum Achskörper gegenüberliegenden Seite ein Außengewinde auf. Nach dem Positionieren des Radlagers 9 gegen einen Anschlag 31 des Hohlwellenelements 2 kann über eine Zentralmutter 32 auf dem Außengewinde eine geeignete Vorspannung auf das Radlager 9 aufgebracht werden.

Alternativ zu dem Außengewinde weist das Hohlwellenelement 2 an der der Schnittstelle zum Achskörper gegenüberliegenden Seite den Ringbund 16 (**Fig. 1**) auf, gegen den im montierten Zustand das Radlager 9 anliegt. Eine Vorspannung wird auf das/die Radlager 9 über die Verschraubung der vormontierten Einheit mit dem Achskörper 5 aufgebracht.

In einer Ausführungsvariante weist das Hohlwellenelement 2 ferner an der der Schnittstelle zum Achskörper gegenüberliegenden Seite die Drehmomentübertragungskontur 17 als Werkzeugschnittstelle auf, beispielsweise einen Innen- oder Außenmehrkant oder eine andere geeignete Schnittstelle zur Drehmomentübertragung auf, um die Verschraubung des Hohlwellenelements 2 mit dem Achskörper 5 zu realisieren (**Fig. 5b**).

Das Hohlwellenelement 2 und der Achskörper 5 können im zusammengebauten Zustand ganz oder teilweise von einem an der Radnabe 8 drehfest befestigten Achsteil 34 durchsetzt sein (**Fig. 1**).

Am anderen Ende des Achskörpers kann eine entsprechende vormontierte Einheit vorgesehen sein. Die Achse ist eine Fahrzeugachse, insbesondere eine Hinterachse eines Zugfahrzeugs oder eine Anhängerachse. Insbesondere ist das Fahrzeug ein Nutzfahrzeug mit einer Bremse mit einer Bremsscheibe 11 mit einem Durchmesser von 15" oder mehr. Gerade bei den dann relativ großen Scheibenbremsen ist die Erfindung von besonderem Vorteil, da der Einbau der Scheibenbremse an der Fahrzeugachse einfach wird.

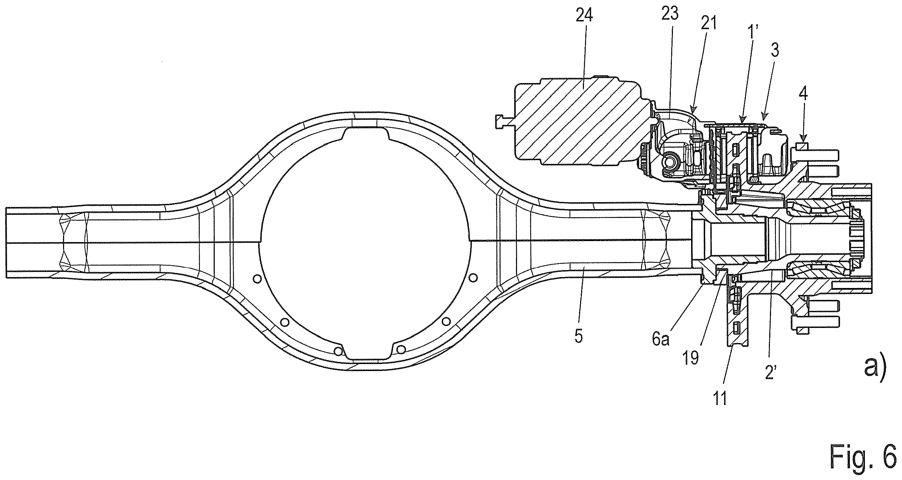

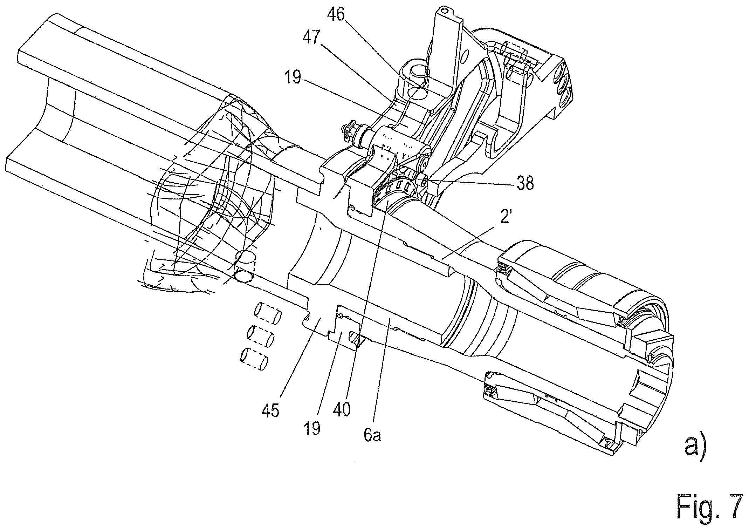

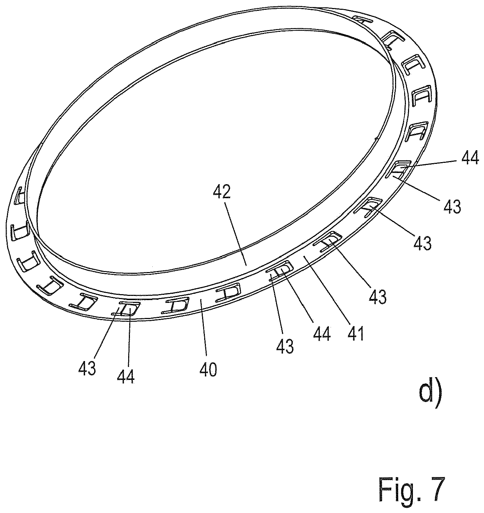

**Fig. 6a** **und** **7a** zeigen Schnittansichten durch eine weitere Anordnung mit einer weiteren erfindungsgemäßen Achsenend-Baugruppe 1', montiert an einem Achskörper 5 und in b) eine Ausschnittsvergrößerung aus a).

Auch diese Achsenend-Baugruppe 1 (wiederum auch "Wheelend" genannt) ist als eine vormontierte Einheit ausgebildet ist, die ein Hohlwellenelement 2' aufweist, an/auf dem eine Radbremsenanordnung 3 und eine Radnabenanordnung 4 angeordnet sind.

Das Hohlwellenelement 2' ist wiederum dazu ausgelegt, mit einem ersten Ende 6 eines nicht in der Fahrt sich drehenden Achskörpers 5 einer Fahrzeugachse verbunden zu werden, wie dies in **Fig. 6a** erkennbar ist.

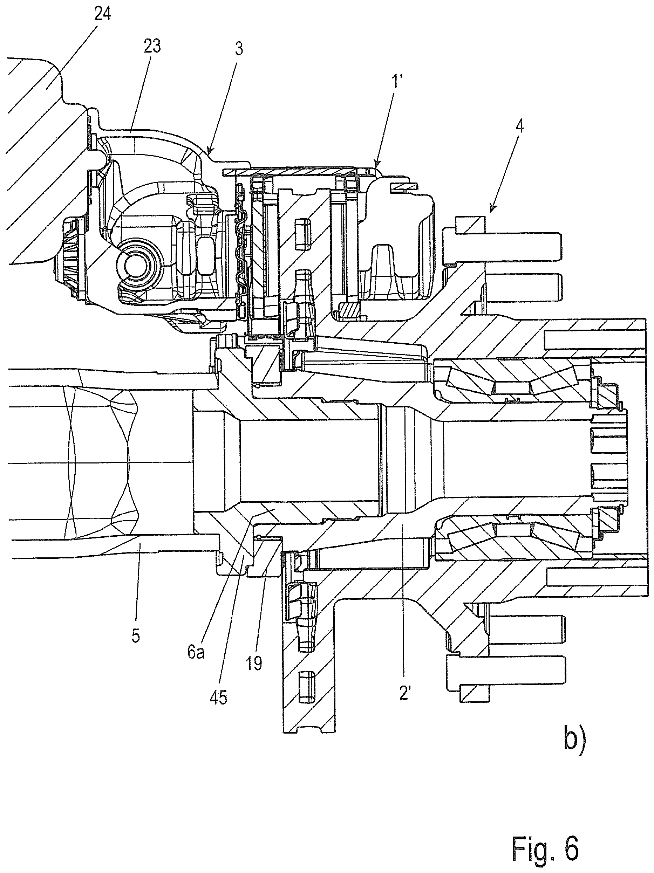

Dabei ist hier das Ende 6 des Achskörpers 5 insofern anders ausgebildet als nach den vorhergehenden Figuren, als hier (jeweils) als das Ende 6 ein Hülsenbauteil 6a an dem einen oder vorzugsweise jeweils an beiden axialen Enden des Achskörpers 5 angebracht ist. Hier ist dieses Hülsenbauteil 6a - siehe auch **Fig. 6b** - bespielhaft durch Schweissen an dem Ende des Achskörpers 5 befestigt. Das Hülsenbauteil 6a verlängert den Achskörper 5 quasi als axiales Ende bzw. setzt diesen fort. Dies hat u.a. den Vorteil, dass dieses Hülsenteil 6a einfach speziell dazu ausgebildet werden kann, um die Achsenendbaugruppe 1' aufzunehmen. So kann - siehe dazu auch **Fig. 7a** - wenigstens ein Abstützring 45 an dem Hülsenteil 6a ausgebildet werden, der sich von dem eigentlichen inneren Hülsenbereich radial nach außen erstreckt.

Der Bremsenadapter 19 ist wieder nach Art einer Platte ausgebildet, die sich im Wesentlichen radial/senkrecht zur Achsrichtung Y erstreckt. Er wird hier auch als Bremsträger genutzt, an dem der Bremssattel 23 der Scheibenbremse 21 angeordnet ist. Eine Zentralmutter ist in Fig. 6a und 6b jeweils nicht dargestellt, ist aber vorzugsweise nach Art/ analog zu Fig. 1 wieder vorgesehen.

Der Bremsenadapter 19 kann mit wenigstens einem Formschlussteil wie einem Bolzen an dem Hülsenteil 6a abgestützt sein. Dieser Bolzen (nicht erkennbar) kann beispielsweise in Umfangsrichtung/tangential ausgerichtet sein und in Bohrungen in in Umfangsrichtung aneinander liegende Stege 46, 47 eingesetzt oder eingeschraubt sein, wobei der eine Steg 46 ein axialer Steg 46 ist des Bremsenadapter 19 ist, der an einem radial vorkragenden Steg 47 des Abstützringes 45 und damit des Hülsenteils 6a anliegt. Hierdurch ist vorteilhaft und einfach eine Abstützung und Verdrehsicherung des Bremsenadapters 19 auf einem relativ großen Radius an dem Hülsenteil 6a realisierbar.

Das Hohlwellenelement 2' übergreift konzentrisch radial außen in seinem zum Bremsenadapter 19 weisenden Endbereich das Hülsenteil 6a und kann auf dieses in einem Gewindebereich aufgeschraubt werden.

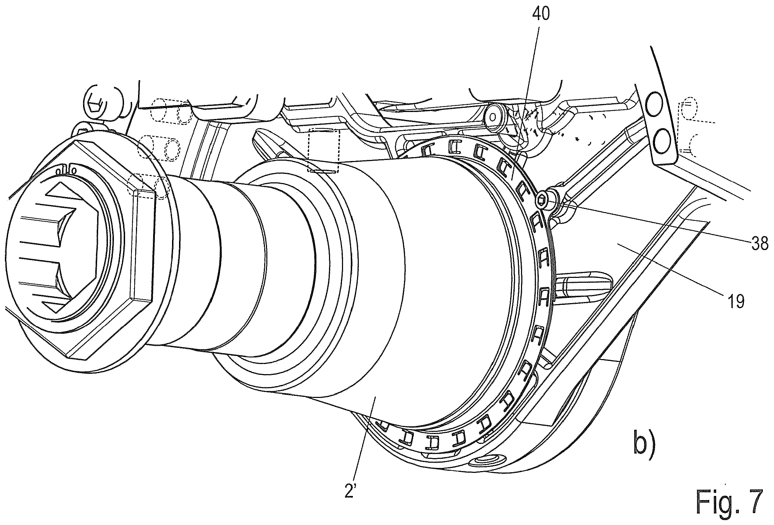

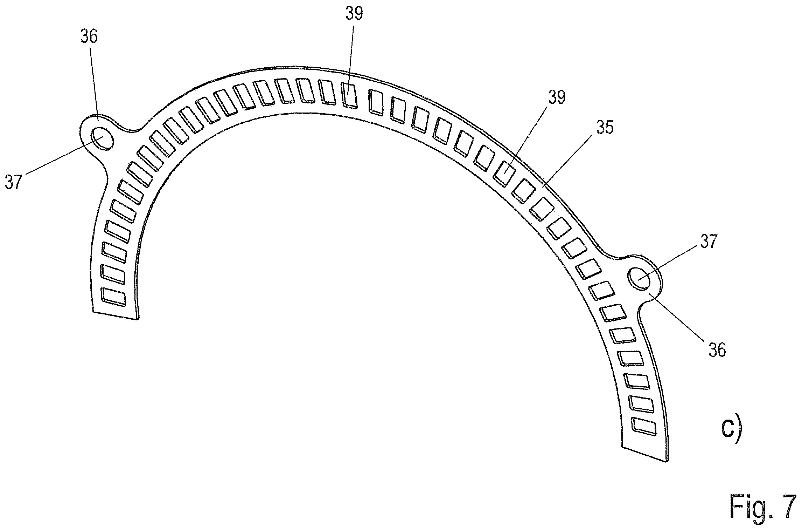

Auf dem Bremsenadapter ist 19 - siehe **Fig. 7a** und **b** - ein Ring oder ein Ringsegment bzw. -abschnitt 35 - **siehe** **Fig. 7c** - befestigt. Hierzu sind an dem Ringsegment 35 eine oder mehrere - hier zwei - Laschen 36 umfangsverteilt ausgebildet. Diese Laschen stehen radial vom Außenumfang des Ringabschnitts 35 vor. Sie weisen jeweils ein Durchgangsloch 37 auf. Die Durchgangslöcher 37 sind von Schrauben 38 durchsetzt. Diese Schrauben 38 sind in entsprechende Gewindebohrungen (hier nicht zu erkennen) im Bremsenadapter 19 eingeschraubt. Derart ist der Ringabschnitt 35 an dem Bremsenadapter 19 einfach und sicher befestigt. In dem Ringabschnitt 35 sind ferner umfangsverteilt bzw. winkelversetzt eine Mehrzahl an Durchgangsöffnungen 39 auf, die hier als rechteckige Schlitze ausgebildet sind. Hier ist im Abstand einiger weniger Winkelgerade jeweils einer dieser Schlitze vorgesehen.

Der Ringabschnitt 35 wirkt mit einem korrespondierenden Ringtopf 40 oder Ringtopfsegment - siehe **Fig. 7b** - zusammen, der einen sich radial erstreckenden Ringabschnitt 41 aufweist und einen sich innen an dem Ringabschnitt 41 ansetzenden, sich axial erstreckenden Topf-/Hülsenabschnitt 42. Dieser Hülsenabschnitt 42 ist an/auf dem Hohlwellenelement 2' drehfest festgelegt. Dieses Festlegen kann auf verschiedene Weise erfolgen, so beispielsweise durch Formschlusselemente (hier nicht dargestellt) realisiert werden oder aber beispielsweise durch einen Presssitz des Hülsenabschnitts 2' auf dem Hohlwellenelement 2'.

Der Ringabschnitt 41 des Ringtopfes 40 weist umfangsverteilt eine Mehrzahl von Federstegen 43 auf, die bis auf eine Verbindung aus dem Ringabschnitt 41 freigestanzt sind. Die Federstege 43 erstrecken sich jeweils in die gleiche Umfangsrichtung und weisen freie Enden 44 auf, die aus der Ebene des Ringabschnitts 41 herausgebogen sind und so axial aus dieser Ebene vorstehen, dass sie in einem montierten Zustand in die Durchgangsöffnungen 39 des Ringabschnittes 35 eingreifen. Derart kann das Hohlwellenelement 2' in einer Drehrichtung relativ zu dem Bremsenadapter 19 verdreht werden. In der anderen Drehrichtung wird hingegen eine Ratschenanordnung realisiert und so mit einfachen Mitteln eine sehr gut wirksame Verdrehsicherung erreicht. Dies erleichtert die Montage weiter.

**BEZUGSZEICHENLISTE**

| | |
|---|---|
| Achsenend-Baugruppe | 1, 1' |
| Hohlwellenelement | 2, 2' |
| Radbremsenanordnung | 3 |
| Radnabenanordnung | 4 |
| Achskörper | 5 |
| erstes Ende | 6 |
| Hülsenbauteil | 6a |
| zweites Ende | 7 |
| Radnabe | 8 |
| Radlager | 9 |
| Radbolzen | 10 |
| Bremsscheibe | 11 |
| Löcher | 12 |
| Rad-Montageflansch | 13 |
| Schrauben | 14 |
| Löcher | 15 |
| Ringbund | 16 |
| Drehmomentübertragungskontur | 17 |
| Distanzrohr | 18 |
| Bremsenadapter | 19 |
| Montageöffnungen | 20 |
| Scheibenbremse | 21 |
| Bremsträger | 22 |
| Bremssattel | 23 |
| Bremszylinder | 24 |
| Gewinde | 25 |
| Gewindeabschnitt | 25a, b |
| Führungsabschnitt | 26 |
| Schnittstellenbereich | 27 |
| Verzahnung | 28, 29 |
| Anschlag | 31 |
| Zentralmutter | 32 |
| Achsteil | 34 |
| Ringsegment bzw. -abschnitt | 35 |
| Laschen | 36 |
| Durchgangslöcher | 37 |
| Schrauben | 38 |
| Durchgangsöffnungen | 39 |
| Ringtopf | 40 |
| Ringabschnitt | 41 |
| Hülsenabschnitt | 42 |
| Federstege | 43 |
| Freie Enden | 44 |
| Abstützring | 45 |
| Steg | 46,47 |

## Patentansprüche

1. Achsenend-Baugruppe (1) für ein Fahrzeug, mit einer Radbremsenanordnung (3) und einer Radnabenanordnung (4), wobei die Achsenend-Baugruppe (1) als eine vormontierte Einheit ausgebildet ist, die ein Hohlwellenelement (2, 2') aufweist, auf dem die Radbremsenanordnung (3) und die Radnabenanordnung (4) angeordnet sind, wobei die vormontierte Einheit als Ganzes an einem Achskörper (5) einer Fahrzeugachse montierbar ist und dass das Hohlwellenelement (2, 2') dazu ausgelegt ist, mit einem ersten Ende (6) des Achskörpers (5) verbunden zu werden, wobei das Hohlwellenelement (2, 2') an seinem einen axialen Ende einen Gewindeabschnitt (25a) aufweist, der dazu ausgelegt ist, mit einem korrespondierenden Gewindeabschnitt (25b) des Achskörpers (5) verschraubt zu werden, wobei die Radbremsanordnung (3) der vormontierten Einheit zumindest einen nach Art einer Montageplatte ausgebildeten und sich im Wesentlichen radial zu dem Hohlwellenelement (2, 2') bzw. zu dessen Achsrichtung (Y) erstreckenden Bremsenadapter (19) zur Montage einer Radbremse, insbesondere einer Scheibenbremse (21), der Radbremsanordnung (3) aufweist, **dadurch gekennzeichnet, dass** der Bremsenadapter (19) von dem Hohlwellenelement (2, 2') durchsetzt ist und dass eine direkte Drehmomentübertragungsschnittstelle zwischen dem Bremsenadapter (19) und dem Achskörper (5) ausgebildet ist.

2. Achsenend-Baugruppe (1) nach Anspruch 1, **dadurch gekennzeichnet, dass** die Radnabenanordnung (4) zumindest eine Radnabe (8) und eines oder mehrere Radlager (9) aufweist.

3. Achsenend-Baugruppe (1) nach Anspruch 2, **dadurch gekennzeichnet, dass** die Radnabenanordnung (4) ferner eine Bremsscheibe (11) und/oder mehrere Radbolzen (10) aufweist.

4. Achsenend-Baugruppe (1) nach Anspruch 2 oder 3, **dadurch gekennzeichnet, dass** die vormontierte Einheit ferner eine Distanzhülse (18) aufweist, welche auf das Hohlwellenelement (2, 2') an die Radnabe (8) angesetzt ist.

5. Achsenend-Baugruppe (1) nach einem der vorstehenden Ansprüche, **dadurch gekennzeichnet, dass** die Scheibenbremse (21) einen Bremssattel aufweist.

6. Achsenend-Baugruppe (1) nach einem der vorstehenden Ansprüche, **dadurch gekennzeichnet, dass** die Scheibenbremse (21) einen Bremsträger (22) aufweist und/oder dass sie einen Bremszylinder (24) aufweist.

7. Achsenend-Baugruppe (1) nach einem der vorstehenden Ansprüche, **dadurch gekennzeichnet, dass** das Hohlwellenelement (2, 2') zum Eingriff in das Ende des Achskörpers (5) ausgelegt ist und dass es neben dem Gewindeabschnitt (25a) vorzugsweise mindestens einen Führungsabschnitt (26) aufweist.

8. Achsenend-Baugruppe (1) nach einem der vorstehenden Ansprüche, **dadurch gekennzeichnet, dass** das Hohlwellenelement (2, 2') neben dem Gewindeabschnitt (25a) vorzugsweise mindestens einen gewindefreien Führungsabschnitt (26) aufweist.

9. Achsenend-Baugruppe (1) nach einem der vorstehenden Ansprüche, **dadurch gekennzeichnet, dass** die direkte Drehmomentübertragungsschnittstelle zwischen dem Bremsenadapter (19) und dem Achskörper (5) durch entsprechend korrespondierende Formschlusselemente an diesen Elementen gebildet ist, die bei der Montage der vormontierten Einheit an dem Achskörper (5) miteinander in Eingriff gelangen.

10. Achsenend-Baugruppe (1) nach einem der vorstehenden Ansprüche, **dadurch gekennzeichnet, dass** die Schnittstelle zwischen dem Bremsenadapter (19) und dem Achskörper (5) einstückig durch Schweißen ausgebildet ist.

11. Achsenend-Baugruppe (1) nach einem der vorstehenden Ansprüche 2 bis 10, **dadurch gekennzeichnet, dass** das Hohlwellenelement (2, 2') an seiner dem Achskörper (5) gegenüberliegenden Seite ein Außengewinde aufweist und dass ein Anschlag (31) für das Radlager (9) vorgesehen ist, so dass über eine Zentralmutter (32) auf dem Außengewinde eine Vorspannung auf das Radlager (9) aufbringbar ist.

12. Achsenend-Baugruppe (1) nach einem der vorstehenden Ansprüche 2 bis 11, **dadurch gekennzeichnet, dass** das Hohlwellenelement (2, 2') an der der Schnittstelle zum Achskörper (5) gegenüberliegenden Seite einen Absatz aufweist, an dem im montierten Zustand das Radlager (9) anliegt.

13. Achsenend-Baugruppe (1) nach einem der vorstehenden Ansprüche, **dadurch gekennzeichnet, dass** das Hohlwellenelement (2, 2') ferner an der der Schnittstelle zum Achskörper (5) gegenüberliegenden Seite eine Drehmomentübertragungskontur (17) aufweist.

14. Achsenend-Baugruppe (1) nach einem der vorstehenden Ansprüche, **dadurch gekennzeichnet, dass** zwischen dem Bremsenadapter (19) und dem Achskörper (5) ein Hülsenbauteil (6a) angeordnet ist, dass an dem Achskörper (5) befestigt ist.

15. Achsenend-Baugruppe (1) nach einem der vorstehenden Ansprüche, **dadurch gekennzeichnet, dass** zwischen dem Bremsenadapter (19) und dem Hohlwellenelement (2, 2') eine in einer Richtung ein Verdrehen sperrende Ratschenanordnung ausgebildet ist.

16. Radachseneinheit mit einem Achskörper (5), an dem wenigstens eine Achsenend-Baugruppe (1) nach einem der vorstehenden Ansprüche angebracht ist.

17. Verfahren zur Montage einer Radachseneinheit nach Anspruch 16, **dadurch gekennzeichnet, dass** zunächst eine Achsenend-Baugruppe (1) als vormontierte Einheit nach einem der Ansprüche 1 bis 15 gebildet wird und dass diese vormontierte Einheit dann als Ganzes mit dem Achskörper (5) schraubend verbunden wird.

18. Verfahren nach Anspruch 17, **dadurch gekennzeichnet, dass** zunächst die vormontierte Einheit "Achsenend-Baugruppe" wie folgt gebildet wird:
- in einem ersten Montageschritt A erfolgt eine Vormontage einer Radnabenanordnung (4) zu einer vormontierten Einheit;
- in einem zweiten Montageschritt B erfolgt ein Auffädeln der Radnabenanordnung 4 aus dem Montageschritt A) auf einen Hohlwellenelement (2, 2'), der dann eine mittige Öffnung der Radnabenanordnung (4) durchsetzt;
- in einem weiteren Montageschritt D erfolgt ein Auffädeln eines zur Radbremsanordnung gehörigen Bremsenadapters (19) zur Montage einer Radbremse, insbesondere einer Scheibenbremse;
- in einem weiteren Montageschritt D erfolgt eine Montage einer Radbremse, insbesondere einer zur Radbremsanordnung (3) gehörigen Scheibenbremse (21) an dem Bremsenadapter (19).

19. Verfahren nach Anspruch 18, **dadurch gekennzeichnet, dass** in einem dritten optionalen Montageschritt C zwischen den Montageschritten B und D ein Auffädeln einer Distanzhülse (18) auf das Hohlwellenelement (2, 2') erfolgt.

20. Verfahren nach einem der vorstehenden Ansprüche 17 bis 19, **dadurch gekennzeichnet, dass** Formschlussmittel zwischen dem Bremsenadapter (19) und dem Achskörper (5) miteinander in Eingriff gebracht werden.

## Claims

1. Axle end assembly (1) for a vehicle, having a wheel brake arrangement (3) and a wheel hub arrangement (4), wherein the axle end assembly (1) is in the form of a preassembled unit which has a hollow shaft element (2, 2'), on which the wheel brake arrangement (3) and the wheel hub arrangement (4) are arranged, wherein the preassembled unit can be mounted as a whole on an axle body (5) of a vehicle axle, and the hollow shaft element (2, 2') is designed to be connected to a first end (6) of the axle body (5), wherein the hollow shaft element (2, 2') has a threaded portion (25a) on the one axial end thereof, which portion is designed to be screwed together with a corresponding threaded portion (25b) of the axle body (5), wherein the wheel brake arrangement (3) of the preassembled unit comprises at least one brake adapter (19) designed in the manner of a mounting plate and extending substantially radially to the hollow shaft element (2, 2') or to the axial direction (Y) thereof for mounting a wheel brake, in particular a disc brake (21), **characterised in that** the brake adapter (19) is penetrated by the hollow shaft element (2, 2') and **in that** a direct torque transmission interface is formed between the brake adapter (19) and the axle body (5).

2. Axle end assembly (1) according to claim 1, **characterised in that** the wheel hub arrangement (4) has at least one wheel hub (8) and one or more wheel bearings (9).

3. Axle end assembly (1) according to claim 2, **characterised in that** the wheel hub arrangement (4) further has a plurality of brake discs (11) and/or a plurality of wheel bolts (10).

4. Axle end assembly (1) according to claim 2 or 3, **characterised in that** the preassembled unit further has a spacer sleeve (18) which is fixed to the hollow shaft element (2, 2') on the wheel hub (8).

5. Axle end assembly (1) according to any of the preceding claims, **characterised in that** the disc brake (21) has a brake calliper.

6. Axle end assembly (1) according to any of the preceding claims, **characterised in that** the disc brake (21) has brake carrier (22) and/or **in that** it has a brake cylinder (24).

7. Axle end assembly (1) according to any of the preceding claims, **characterised in that** the hollow shaft element (2, 2') is designed to engage with the end of the axle body (5), and **in that**, in addition to the threaded portion (25a), said element preferably has at least one guide portion (26).

8. Axle end assembly (1) according to any of the preceding claims, **characterised in that** the hollow shaft element (2, 2') has, in addition to the threaded portion (25a), preferably at least one non-threaded guide portion (26).

9. Axle end assembly (1) according to any of the preceding claims, **characterised in that** the direct torque transmission interface between the brake adapter (19) and the axle body (5) is formed by accordingly corresponding positive-locking elements on these elements which engage with one another during the mounting of the preassembed unit on the axle body (5).

10. Axle end assembly (1) according to any of the preceding claims, **characterised in that** the interface between the brake adapter (19) and the axle body (5) is formed integrally by welding.

11. Axle end assembly (1) according to any of the preceding claims, **characterised in that** the hollow shaft element (2, 2') has a male thread (30) on the side thereof which is opposite the axle body (5), and **in that** a stop (31) for the wheel bearing (9) is provided so that a preload can be applied to the wheel bearing (9) by means of a central nut (32) on the male thread (30).

12. Axle end assembly (1) according to any of the preceding claims, **characterised in that** the hollow shaft element (2, 2') has, on the side which is opposite the interface to the axle body (5), a shoulder (33) against which the wheel bearing (9) rests in the mounted state.

13. Axle end assembly (1) according to any of the preceding claims, **characterised in that** the hollow shaft element (2, 2') further has, on the side which is opposite the interface to the axle body (5), a torque transmission contour (17).

14. Axle end assembly (1) according to any of the preceding claims, **characterised in that,** between the brake adapter (19) and the axle body (5), a sleeve component (6a) is arranged, which is attached to the axle body (5).

15. Axle end assembly (1) according to any of the preceding claims, **characterised in that,** between the brake adapter (19) and the hollow shaft element (2, 2'), a ratchet arrangement which locks rotation in one direction is formed.

16. Wheel axle unit, having an axle body (5), to which at least one axle end assembly (1) according to any of the preceding claims is attached.

17. Method for mounting a wheel axle unit according to claim 16, **characterised in that** firstly an axle end assembly (1) is formed as a preassembled unit according to any of claims 1 to 15, and **in that** said preassembled unit is then joined as a whole on the axle body (5) by bolting.

18. Method according to claim 17, **characterised in that** firstly the pre-mounted unit "axle end assembly" is formed as follows:
- in a first mounting step A, a preassembly of a wheel hub arrangement (4) to form a preassembled unit takes place;
- in a second mounting step B, a threading of the wheel hub arrangement 4 from the mounting step A) onto a hollow shaft element (2, 2') takes place, which element then penetrates a central opening in the wheel hub arrangement (4);
- in a further mounting step D, a threading of a brake adapter (19) belonging to the wheel brake arrangement takes place for mounting a wheel brake, in particular disc brake;
- in a further mounting step D, a mounting of a wheel brake, in particular a disc brake (21) belonging to the wheel brake arrangement (3), on the brake adapter (19) takes place.

19. Method according to claim 17, **characterised in that**, in a third optional mounting step C between the mounting steps B and D, a threading of a spacer sleeve (18) onto the hollow shaft element (2, 2') takes place.

20. Method according to any of the preceding claims 17 to 19, **characterised in that** positive-locking means between the brake adapter (19) and the axle body (5) are brought into engagement with one another.

## Revendications

1. Module (1) d'extrémité d'essieu pour un véhicule, comprenant un dispositif (3) de frein de roue et un dispositif (4) de moyeu de roue, dans lequel le module (1) d'extrémité d'essieu est constitué sous la forme d'une unité prémontée, qui a un élément (2, 2') d'arbre creux, sur lequel le dispositif (3) de frein de roue et le dispositif (4) de moyeu de roue sont montés, dans lequel l'unité prémontée peut être montée en son entier sur un corps (5) d'un essieu de véhicule, et en ce que l'élément (2, 2') d'arbre creux est conçu pour être relié à une première extrémité (6) du corps (5) de l'essieu, dans lequel l'élément (2, 2') d'arbre creux a, à sa une extrémité axiale, une partie (25a) filetée, qui est conçue pour être vissée avec une partie (25b) filetée correspondante du corps (5) de l'essieu, dans lequel le dispositif (3) de frein de roue de l'unité prémontée a, pour le montage d'un frein de roue, en particulier d'un frein (21) à disque, du dispositif (3) de frein de roue, au moins un adaptateur (19) de frein constitué à la manière d'une plaque de montage et s'étendant sensiblement radialement par rapport à l'élément (2, 2') d'arbre creux ou à sa direction (Y),
**caractérisé en ce que** l'adaptateur (19) de frein est traversé par l'élément (2, 2') d'arbre creux et ce qu'une interface de transmission directe de couple est constituée entre l'adaptateur (19) de frein et le corps (5) de l'essieu.

2. Module (1) d'extrémité d'essieu suivant la revendication 1, **caractérisé en ce que** le dispositif (4) de moyeu de roue a au moins un moyeu (8) de roue et un ou plusieurs roulements (9) de roue.

3. Module (1) d'extrémité d'essieu suivant la revendication 2, **caractérisé en ce que** le dispositif (4) de moyeu de roue a en outre un disque (11) de frein et/ou plusieurs axes (10) de fixation de roue.

4. Module (1) d'extrémité d'essieu suivant la revendication 2 ou 3, **caractérisé en ce que** l'unité prémontée a en outre un manchon (18) de mise à distance, qui est mis sur le moyeu (8) de roue sur l'élément (2, 2') d'arbre creux.

5. Module (1) d'extrémité d'essieu suivant l'une des revendications précédentes, **caractérisé en ce que** le frein (21) à disque a un étrier de frein.

6. Module (1) d'extrémité d'essieu suivant l'une des revendications précédentes, **caractérisé en ce que** le frein (21) à disque a un flasque (22) de frein et/ou **en ce qu'**il a un cylindre (24) de frein.

7. Module (1) d'extrémité d'essieu suivant l'une des revendications précédentes, **caractérisé en ce que** l'élément (2, 2') d'arbre creux est conçu pour pénétrer dans l'extrémité du corps (5) de l'essieu, et **en ce qu'**il a, outre la partie (25a) filetée, de préférence au moins une partie (26) de guidage.

8. Module (1) d'extrémité d'essieu suivant l'une des revendications précédentes, **caractérisé en ce que** l'élément (2, 2') d'arbre creux a, outre la partie (25a) filetée, de préférence au moins une partie (26) de guidage sans filetage.

9. Module (1) d'extrémité d'essieu suivant l'une des revendications précédentes, **caractérisé en ce que** l'interface de transmission directe de couple, entre l'adaptateur (19) de frein et le corps (5) de l'essieu, est formée d'éléments à complémentarité de forme se correspondant en conséquence sur ces éléments qui, lors du montage de l'unité prémontée, sur le corps (5) de l'essieu, viennent en prise les uns avec les autres.

10. Module (1) d'extrémité d'essieu suivant l'une des revendications précédentes, **caractérisé en ce que** l'interface, entre l'adaptateur (19) de frein et le corps (5) de l'essieu, est constituée d'une seule pièce par soudage.

11. Module (1) d'extrémité d'essieu suivant l'une des revendications 2 à 10 précédentes, **caractérisé en ce que** l'élément (2, 2') d'arbre creux a, sur son côté opposé au corps (5) de l'essieu, un filetage extérieur, et **en ce qu'**il est prévu une butée (31) pour le roulement (9) de roue, de manière à ce que, par un écrou (32) central sur le filetage extérieur, une précontrainte puisse être appliquée au roulement (9) de roue.

12. Module (1) d'extrémité d'essieu suivant l'une des revendications 2 à 11 précédentes, **caractérisé en ce que** l'élément (2, 2') d'arbre creux a, du côté de l'interface opposé au corps (5) de l'essieu, un talon, auquel le roulement (9) de roue s'applique à l'état monté.

13. Module (1) d'extrémité d'essieu suivant l'une des revendications précédentes, **caractérisé en ce que** l'élément (2, 2') d'arbre creux a en outre, du côté de l'interface opposé au corps (5) de l'essieu, un contour (17) de transmission de couple.

14. Module (1) d'extrémité d'essieu suivant l'une des revendications précédentes, **caractérisé en ce que,** entre l'adaptateur (19) de frein et le corps (5) de l'essieu, est montée une pièce (6a) de douille, qui est fixée au corps (5) de l'essieu.

15. Module (1) d'extrémité d'essieu suivant l'une des revendications précédentes, **caractérisé en ce qu'**un dispositif à cliquet bloquant une rotation dans un sens est constitué entre l'adaptateur (19) de frein et l'élément (2, 2') d'arbre creux.

16. Unité d'essieu de roue, comprenant un corps (5) d'essieu, sur lequel est monté au moins un module (1) d'extrémité d'essieu suivant l'une des revendications précédentes.

17. Procédé de montage d'une unité d'essieu de roue suivant la revendication 16, **caractérisé en ce que** l'on forme d'abord un module (1) d'extrémité d'essieu sous la forme d'une unité prémontée suivant l'une des revendications 1 à 15, et **en ce que** l'on relie cette unité prémontée ensuite en son entier par vissage au corps (5) de l'essieu.

18. Procédé suivant la revendication 17, **caractérisé en ce que** l'on forme d'abord l'unité prémontée « module d'extrémité d'essieu », de la manière suivante :
- dans un premier stade A de montage, s'effectue un prémontage d'un dispositif (4) de moyeu de roue en une unité prémontée,
- dans un deuxième stade B de montage, s'effectue un emmanchement du dispositif (4) de moyeu de roue du stade A) de montage sur un élément (2, 2') d'arbre de creux, qui passe alors dans une ouverture au milieu du dispositif (4) de moyeu de roue,
- dans un autre stade D de montage, s'effectue un emmanchement d'un adaptateur (19) de frein appartenant au dispositif de frein de roue pour le montage d'un frein de roue, en particulier d'un frein à disque,
- dans un autre stade D de montage, s'effectue un montage d'un frein de roue, en particulier d'un frein (21) à disque appartenant au dispositif (3) de frein à roue sur l'adaptateur (19) de frein.

19. Procédé suivant la revendication 18, **caractérisé en ce que**, dans un troisième stade C facultatif de montage, entre les stades B et D de montage, s'effectue un emmanchement d'un manchon (18) de mise à distance sur l'élément (2, 2') d'arbre creux.

20. Procédé suivant l'une des revendications 17 à 19 précédentes, **caractérisé en ce que** l'on met en prise des moyens à complémentarité de forme entre l'adaptateur (19) de frein et le corps (5) de l'essieu.
